(19) Europäisches Patentamt
European Patent Office
Office européen des brevets

(11) **EP 2 981 851 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(51) Int Cl.:
***G01V 3/10*** *(2006.01)*

(21) Anmeldenummer: **14704367.3**

(22) Anmeldetag: **14.02.2014**

(86) Internationale Anmeldenummer:
**PCT/EP2014/052938**

(87) Internationale Veröffentlichungsnummer:
**WO 2014/161689 (09.10.2014 Gazette 2014/41)**

(54) **OBJEKTSUCHGERÄT UND VERFAHREN ZUM ORTEN EINES METALLISCHEN UND/ODER MAGNETISIERBAREN OBJEKTS**

OBJECT LOCATER AND METHOD FOR LOCATING A METALLIC AND/OR MAGNETIZABLE OBJECT

APPAREIL DE RECHERCHE D'OBJETS ET PROCÉDÉ DE LOCALISATION D'UN OBJET MÉTALLIQUE ET/OU AIMANTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2013 DE 102013205910**

(43) Veröffentlichungstag der Anmeldung:
**10.02.2016 Patentblatt 2016/06**

(73) Patentinhaber: **Robert Bosch GmbH**
**70442 Stuttgart (DE)**

(72) Erfinder:
• **HAHL, Markus**
**70825 Korntal-Muenchingen (DE)**
• **WINTERHALTER, Juergen**
**70191 Stuttgart (DE)**
• **ALBRECHT, Andrej**
**70771 Leinfelden-Echterdingen (DE)**
• **ZIBOLD, Tobias**
**70567 Stuttgart (DE)**
• **GROSSMANN, Oliver**
**70374 Stuttgart (DE)**

(56) Entgegenhaltungen:
CH-A- 532 254     DE-A1-102004 047 188
US-A1- 2012 049 850

EP 2 981 851 B1

**Beschreibung**

Die Erfindung betrifft ein Objektsuchgerät auch Ortungsgerät genannt. Insbesondere betrifft die Erfindung ein temperaturkompensiertes Objektsuchgerät und ein Verfahren zur Temperaturkompensation eines Objektsuchgeräts.

Stand der Technik

Ein Objektsuchgerät zur Ortung eines metallischen oder magnetisierbaren Objekts erzeugt mittels einer Sendespule ein elektromagnetisches Feld und prüft mittels einer Empfangsspule, ob das elektromagnetische Feld durch das Objekt verändert wurde.

WO 2010/133328 A1 zeigt einen Metalldetektor mit zwei Sendespulen und einer Empfangsspule. Die Sendespulen werden mit phasenverschobenen Wechselströmen beaufschlagt und ein Ausgangssignal einer Empfangsspule, die induktiv mit den Sendespulen gekoppelt ist, wird ausgewertet. Ströme bzw. Spannungen der Sendespulen werden in Abhängigkeit des Empfangssignals so verändert, dass das Empfangssignal ausgelöscht wird. Aus dem Verhältnis der Spannungen bzw. Ströme der Sendespulen kann dann auf das Vorhandensein eines metallischen Objekts im Bereich der Sende- und Empfangsspulen geschlossen werden. DE 10 2004 047188 A1 zeigt eine Vorrichtung zur Ortung metallischer Objekte, mit mindestens einer Sendespule und zumindest einem Empfangswindungssystem, die induktiv miteinander gekoppelt sind, wobei elektrische Schaltmittel dazu vorgesehen sind, eine effektive Windungszahl des mindestens einen Empfangswindungssystems zu variieren.

Eine Änderung eines Stroms durch die Sende- oder Empfangsspule eines Objektsuchgeräts kann jedoch auch durch einen Temperatureinfluss bedingt sein. Beispielsweise kann eine Strom- oder Spannungsquelle für die Sendespule oder ein Messverstärker für die Empfangsspule einer Temperaturdrift unterworfen sein. Auch geometrische Verhältnisse der verwendeten Spulen können durch eine Temperaturänderung verändert werden.

Die Drift kann so groß sein, dass das Objekt nicht mehr zweifelsfrei gefunden werden kann oder sich an einer anderen als der bestimmten Stelle befindet.

Es ist daher Aufgabe der Erfindung, ein Verfahren zur Bestimmung eines Temperatureinflusses auf einen Sensor zur Ortung metallischer oder magnetischer Objekte, ein korrespondierendes Computerprogrammprodukt und einen entsprechenden Sensor anzugeben. Weiter ist es Aufgabe der Erfindung, ein Messgerät, insbesondere ein Objektsuchgerät oder auch Ortungsgerät genannt, zur Verfügung zu stellen.

Die Erfindung löst diese Aufgaben mittels der Gegenstände der unabhängigen Ansprüche. Unteransprüche geben bevorzugte Ausführungsformen wieder.

Offenbarung der Erfindung

Ein Sensor zur Ortung metallischer und/oder magnetischer Objekte umfasst zumindest zwei Sendespulen und eine Empfangsspule, die induktiv miteinander gekoppelt sind. In einem erfindungsgemäßen Verfahren zur Bestimmung eines Temperatureinflusses auf den Sensor wird ein erstes Paar vorbestimmter Wechselspannungen an den Sendespulen bereitgestellt und es werden Ströme durch die Sendespulen sowie eine erste Spannung der Empfangsspule abgetastet, insbesondere werden diese gleichzeitig, also insbesondere bei Anliegen des erstes Paar vorbestimmter Wechselspannungen abgetastet. Anschließend wird ein zweites Paar vorbestimmter Wechselspannungen an den Sendespulen bereitgestellt und die Ströme durch die Sendespulen sowie eine zweite Spannung der Empfangsspule wird abgetastet, insbesondere werden diese Ströme bzw. die Spannung gleichzeitig, also insbesondere bei Anliegen des zweiten Paars vorbestimmter Wechselspannungen abgetastet. Auf der Basis der bestimmten Ströme und Spannungen werden dann Kopplungsfaktoren zwischen den Sendespulen und der Empfangsspule bestimmt und das Objekt wird auf der Basis der Kopplungsfaktoren bestimmt, wobei das Objekt (105) bestimmt wird, wenn sich die Kopplungsfaktoren (K1, K2) gegenüber den Kopplungsfaktoren einer zurückliegenden Messung unterscheiden. Unter einer Bestimmung des Objekte wird insbesondere die Identifizierung der Lage bzw. Position des Objektes und gegebenenfalls auch die Identifizierung der Art des Objektes verstanden

Dem Verfahren liegt der Gedanke zugrunde, dass sich unter Einfluss eines Objekts im Bereich der Sendespulen und der Empfangsspule sowohl die Spannungen der Empfangsspule als auch die Kopplungsfaktoren ändern.

Handelt es sich um einen Temperatureinfluss, der die Spannungen der Empfangsspule ändert, so bleiben die Kopplungsfaktoren unverändert. Durch einen Vergleich der bestimmten Spannungen und der bestimmten Kopplungsfaktoren mit Referenzwerten, die beispielsweise einmalig bestimmt oder fest vorgegeben sind, kann der Temperatureinfluss auf einfache und zuverlässige Weise bestimmt werden. Damit kann beispielsweise eine Temperaturdrift einer Spannungs- oder Stromquelle für die Sendespulen oder eines Messverstärkers für die Empfangsspule bestimmt bzw. kompensiert werden. Das Verfahren kann so eine temperaturkompensierte Objektbestimmung zulassen.

Das Objekt wird bestimmt, also als Objekt erkannt, wenn sich die Kopplungsfaktoren gegenüber den Kopplungsfaktoren einer zurückliegenden Messung unterscheiden. So kann sicher zwischen einem Einfluss des Objekts und einem Temperatureinfluss auf die Empfangssignale unterschieden werden.

In einer bevorzugten Ausführungsform beziehen sich die zurückliegend bestimmten Spannungen und Kopplungsfaktoren auf eine Anordnung, bei der die induktive Kopplung zwischen den Sendespulen und der Empfangsspule von metallischen oder magnetisierbaren Objekten unbeeinflusst ist. So kann sichergestellt werden, dass kein Referenzobjekt mit vorbestimmten magnetischen Eigenschaften zur Bestimmung des Temperatureinflusses verwendet werden muss.

In einer Ausführungsform sind die Spannungen des ersten Paars Wechselspannungen zueinander jeweils um weniger als $\pm5°$ phasenverschoben und die Spannungen des zweiten Paars Wechselspannungen ebenfalls um weniger als $\pm5°$ zueinander phasenverschoben.

In einer besonders bevorzugten Ausführungsform sind Konstanten A, B, C1 und C2 gewählt, wobei während des ersten Paars Wechselspannungen die Spannung der ersten Sendespule A und die Spannung der Sendespule B + C1 beträgt. Während des zweiten Paars Wechselspannungen beträgt die Spannung der ersten Sendespule A + C2 und die der zweiten Sendespule B. Der Summand C1 beträgt dabei ca. 3 - 7% von A und der Summand C2 ca. 3 - 7 % von B. Ferner gilt, dass A/B vorzugsweise dem Verhältnis des Kopplungsfaktors der zweiten Sendespule zu dem der ersten Sendespule entspricht.

Durch diese Wahl der Spannungen und Verhältnisse kann verhindert werden, dass die Spannung der Empfangsspule sowohl während des ersten als auch während des zweiten Paars Wechselspannung den Wert Null annimmt. Die mathematische und prozesstechnische Behandlung der oben beschriebenen Spannungen und Ströme kann dadurch vereinfacht durchgeführt werden. Eine Behandlung eines Sonderfalls bzw. ein Verwerfen einer Fehlmessung kann sich dadurch erübrigen.

In noch einer weiteren Ausführungsform werden die Kopplungsfaktoren ein erstes Mal und nach Umkonfiguration der Messanordnung, insbesondere nach Umkehr der Polarität der Empfangsspule, ein zweites Mal bestimmt und miteinander verrechnet, insbesondere skaliert und paarweise voneinander abgezogen. So kann auf einfache Weise der Temperatureinfluss auf ein Messergebnis, das der Bestimmung des Objekts zu Grunde liegt, weiter verkleinert werden.

Ein erfindungsgemäßes Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Ein erfindungsgemäßer Sensor zur Ortung eines metallischen oder magnetisierbaren Objekts umfasst zumindest zwei Sendespulen und eine Empfangsspule, die induktiv miteinander gekoppelt sind, eine Ansteuereinrichtung zur Versorgung der Sendespulen mit Wechselspannungen und eine Abtasteinrichtung zur Bestimmung von Strömen durch die Sendespulen sowie des Empfangssignals, während Spannungen an den Sendespulen erste bzw. zweite vorbestimmte Wertepaare annehmen. Dabei ist die Verarbeitungseinrichtung dazu eingerichtet, Kopplungsfaktoren zwischen den Sendespulen und der Empfangsspule auf der Basis der bestimmten Ströme und Spannungen zu bestimmen und das Objekt auf der Basis der Kopplungsfaktoren zu bestimmen.

Ein solcher Sensor kann den bestimmten Temperatureinfluss im üblichen Betrieb zur Ortung des Objekts berücksichtigen, um dadurch auftretende Messfehler zu kompensieren. Dadurch kann ein temperaturkompensiertes Bestimmen des Objekts ermöglicht sein.

In vorteilhafter Weise lässt sich damit ein Messgerät, insbesondere ein Ortungsgerät zur Detektion von in einem Medium eingeschlossenen Objekten, realisieren, welches kompakt, leistungsfähig und kalibrierungsfrei ist, d.h. nicht mehr vor jeder einzelnen Messung von einem Anwender kalibriert werden muss

In einer Ausführungsform sind Teile des Sensors mittels eines programmierbaren Mikrocomputers implementiert. Die Abtasteinrichtung kann einen Analog-Digital-Wandler umfassen und es können Auswahlmittel vorgesehen sein, um mittels der Abtasteinrichtung alternativ das Empfangssignal oder einen der Spulenströme abzutasten. Zur Bestimmung der Spulenströme kann jeweils ein Messwiderstand mit der Sendespule in Reihe geschaltet sein, wobei die am Messwiderstand abfallende Spannung auf den durch die Sendespule fließenden Strom hinweist. Der Analog-Digital-Wandler kann vom programmierbaren Mikrocomputer umfasst sein und die Auswahlmittel können einfach implementiert sein, um die genannten Ströme bzw. Spannungen zu messen. Ein schaltungstechnischer Aufwand der - ggf. internen - Peripherie des programmierbaren Mikrocomputers kann dadurch gering gehalten sein. Dementsprechend können Herstellungskosten des Sensors verringert sein.

In ähnlicher Weise kann die Ansteuereinrichtung einen Digital-Analog-Wandler zum Ansteuern wenigstens einer der Sendespulen umfassen. Es können auch zwei Digital-Analog-Wandler vorgesehen sein, wobei jeweils einer der Sendespulen fest zugeordnet ist.

Optional kann eine erste Referenzspannungsquelle zur Beaufschlagung der Empfangsspule mit einer vorbestimmten Spannung vorgesehen sein. Das mittels der Empfangsspule bestimmbare Empfangssignal kann so auf die Spannung der ersten Referenzspannungsquelle bezogen sein. Es kann auch eine zweite Referenzspannungsquelle zur Beaufschlagung der Sendespulen mit jeweils einer vorbestimmten Spannung vorgesehen sein. In weiteren Ausführungsformen kann die Spannung der ersten Referenzspannungsquelle oder die Spannung der zweiten Referenzspannungsquelle mittels der oben erwähnten Auswahlmittel mit dem Analog-Digital-Wandler verbunden werden, um absolute Werte der Referenzspannungen zu bestimmen. Dadurch kann vermieden werden, dass eine Temperaturdrift der Referenzspannungsquellen unerkannt bleibt.

Kurze Beschreibung der Figuren

Die Erfindung wird nun mit Bezug auf die beigefügten Figuren genauer beschrieben, in denen:

Fig. 1 ein Schaltbild eines Sensors zur Ortung metallischer oder magnetisierbarer Objekte;

Fig. 2 zwei Ausführungsformen von Spulen des Sensors von Fig. 1, und

Fig. 3 ein Ablaufdiagramm eines Verfahrens zum Bestimmen eines Temperatureinflusses auf den Sensor von Fig. 1

darstellt.

Beschreibung von Ausführungsformen

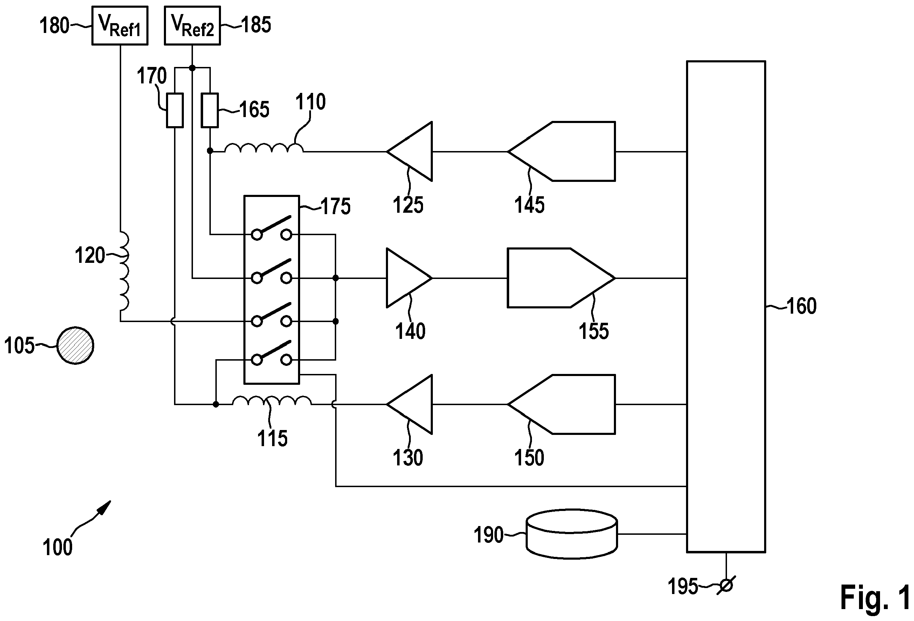

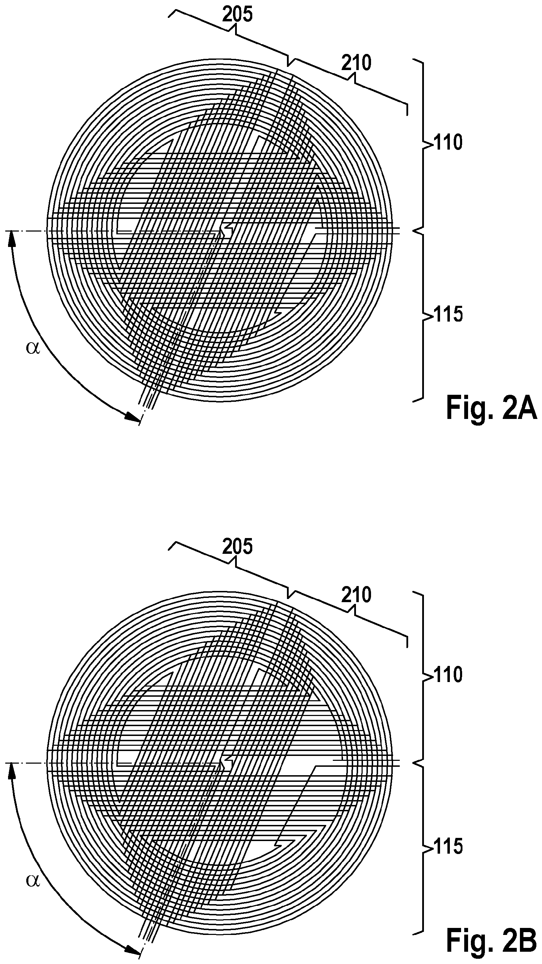

Fig. 1 zeigt ein Schaltbild eines Sensors 100 zur Ortung metallischer oder magnetisierbarer Objekte 105. Der Sensor 100 umfasst eine erste Sendespule 110, eine zweite Sendespule 115 und eine Empfangsspule 120, die induktiv miteinander gekoppelt sind, wobei ein bevorzugter Aufbau der Spulen 110, 115 und 120 unten mit Bezug auf Fig. 2 genauer ausgeführt ist. Die Sendespulen 110 und 115 werden mit Wechselspannungen beaufschlagt, so dass sie elektromagnetische Felder generieren, die auf die Empfangsspule 120 wirken. Die Empfangsspule 120 wandelt das gegebenenfalls vom Objekt 105 beeinflusste elektromagnetische Feld in eine Spannung um, die als Empfangssignal zur Verfügung steht. Auf der Basis des Empfangssignals kann, unter Berücksichtigung der geometrischen Anordnung der Spulen 110, 115 und 120 auf das Vorhandensein oder die Absenz des Objekts 105 geschlossen werden.

Zur Verstärkung oder Impedanzwandlung ist der ersten Sendespule 110 ein erster Sendeverstärker 125, der zweiten Sendespule 115 ein zweiter Sendeverstärker 130 und der Empfangsspule 120 ein Empfangsverstärker 140 zugeordnet. In dem Schaltbild von Fig. 1 ist ein Teil des Sensors 100 bevorzugterweise in digitaler Technik ausgeführt. Die digitalen Elemente können insbesondere von einem integrierten, programmierbaren Mikrocomputer umfasst sein.

Alternativ können auch einige oder alle der Elemente diskret bzw. analog aufgebaut sein. Der erste Sendeverstärker 125 wird durch einen ersten Analog-Digital-Wandler 145 und der zweite Sendeverstärker 130 durch einen zweiten Analog-Digital-Wandler 150 angesteuert. Das Empfangssignal des Empfangsverstärkers 140 wird einem Digital-Analog-Wandler 155 bereitgestellt. Eine Verarbeitungseinrichtung 160 ist dazu eingerichtet, die Analog-Digital-Wandler 145 und 150 so anzusteuern, dass an den Sendespulen 110 und 115 Wechselspannungen anliegen, die üblicherweise unterschiedliche Amplituden aufweisen und einer kleinen Phasenverschiebung, üblicherweise im Bereich von unter ca. 10°, unterliegen. Die verwendeten Frequenzen und Impulsformen sind jedoch gleich; als bevorzugte Impulsform werden ein Rechteck oder eine zumindest angenäherte Sinusform verwendet.

Zur Bestimmung eines Temperatureinflusses auf den Sensor 100 sind ein erster Messwiderstand (Shunt) 165 in Serie mit der ersten Sendespule 110 und ein zweiter Messwiderstand 170 in Serie mit der zweiten Sendespule 115 vorgesehen. Die an den Messwiderständen 165 bzw. 170 abfallenden Spannungen weisen auf die durch die Sendespulen 110 bzw. 115 fließenden Ströme hin. Die Messwiderstände 165 bzw. 170 haben bevorzugterweise eine geringe Temperaturabhängigkeit und eine geringe Bauteiltoleranz.

Der Spannung der Empfangsspule 120 und den Strömen durch die Sendespulen 110 und 115 können jeweils dedizierte Empfangsverstärker 140 bzw. Abtasteinrichtungen zugeordnet sein. In der dargestellten, bevorzugten Ausführungsform sind stattdessen Auswahlmittel 175 vorgesehen, die durch die Verarbeitungseinrichtung 160 steuerbar sind, um nur eines von mehreren unterschiedlichen Signalen mit dem Eingang des Empfangsverstärkers 140 zu verbinden. Die Auswahlmittel 175 umfassen bevorzugterweise Schalter oder vergleichbare Schaltelemente, von denen zu jeder Zeit nicht mehr als einer geschlossen ist. So kann alternativ die am ersten Messwiderstand 165 oder die am zweiten Messwiderstand 170 abfallende Spannung oder das Messsignal an der Empfangsspule 120 mit dem Eingang des Empfangsverstärkers 140 verbunden werden.

In der dargestellten, bevorzugten Ausführungsform ist ein nicht mit dem Eingangsverstärker 140 verbundenes Ende der Empfangsspule 120 mit einer ersten Referenzspannungsquelle 180, und nicht mit den Sendeverstärkern 125 bzw. 130 verbundene Enden der Sendespulen 110 und 115 mit einer zweiten Referenzspannungsquelle 185 verbunden.

Die Referenzspannungsquellen 180 und 185 stellen jeweils eine vorbestimmte Gleichspannung zur Verfügung, um die Spulen 110, 115 bzw. 120 in einem vorbestimmten Arbeitspunkt betreiben zu können. In der dargestellten Ausführungsform sind die Auswahlmittel 175 auch dazu eingerichtet, alternativ die zweite Referenzspannungsquelle 185 mit dem Empfangsverstärker 140 zu verbinden. In einer Erweiterung können die Auswahlmittel 175 auch dazu eingerichtet sein, die erste Referenzspannungsquelle 180 mit dem Empfangsverstärker 140 zu verbinden.

Die Verarbeitungseinrichtung 160 ist dazu eingerichtet, mittels der Ausgangsverstärker 125, 130 erste Wechselspannungen an die Sendespulen 110 und 115 anzulegen und dann mittels der Auswahlmittel 175 und des Empfangsverstärkers 140 das Eingangssignal der Empfangsspule 120 sowie die durch die Sendespulen 110 und 115 fließenden Ströme zu bestimmen. Dabei haben die an den Sendespulen 110 und 115 anliegenden Wechselspannungen bevorzugterweise vorbestimmte Amplitudenverhältnisse und eine vorbestimmte Phasenverschiebung. Dieses Vorgehen wird anschließend mit zweiten Wechselspannungen wiederholt, die sich von den ersten Wechselspannungen unterscheiden.

Dann werden auf der Basis der bestimmten Ströme und Spannungen ein erster Kopplungsfaktor K1 zwischen der ersten Sendespule 110 und der Empfangsspule 120 sowie ein zweiter Kopplungsfaktor K2 zwischen der zweiten Sendespule 115 und der Empfangsspule 120 bestimmt. In einem Speicher 190 sind wenigstens Kopplungsfaktoren, vorzugsweise Kopplungsfaktoren und Empfangssignale einer vorhergehenden Bestimmung abgelegt. Die abgelegten Werte können durch die Bauart des Sensors 100 bedingt und fest vorgegeben sein. In einer anderen Ausführungsform werden die Werte einmalig bestimmt, beispielsweise auf die beschriebene Art, während kein Objekt 105 im induktiven Einflussbereich der Spulen 110 bis 120 liegt, dann werden die bestimmten Werte im Speicher 190 abgelegt.

Unterscheiden sich die Empfangssignale der Empfangsspule 120 von den abgespeicherten Empfangssignalen, so kann dies auf ein Objekt 105 oder einen Temperatureinfluss auf Teile des Sensors 100 zurückzuführen sein. Unterscheiden sich die bestimmten Kopplungsfaktoren K1 und K2 von den abgespeicherten Kopplungsfaktoren nicht, so unterliegt der Sensor 100 einem Temperatureinfluss. Der bestimmte Temperatureinfluss kann über eine Schnittstelle 195 ausgegeben werden. Andernfalls, wenn die Kopplungsfaktoren K1, K2 gegenüber der zurückliegenden Messung unterschiedlich sind, befindet sich ein Objekt 105 im Bereich der Spulen 110 bis 120. Das Objekt 105 kann dann auf der Basis der bestimmten Empfangssignale und Kopplungsfaktoren unter Bezugnahme auf die Geometrie der Sendespulen 110 und 115 und der Empfangsspule 120 in seiner Größe, Art und Position genauer bestimmt werden. Das Resultat kann ebenfalls über die Schnittstelle 195 ausgegeben werden.

Für die Messungen der Ströme und Spannungen an den Spulen 110 bis 120 gelten folgende Gleichungen:

$$U_{\sec}(1) = K1 \cdot I1(1) + K2 \cdot I2(1) \qquad \text{(Gleichung 1)}$$

$$U_{\sec}(2) = K2 \cdot I1(2) + K2 \cdot I2(2) \qquad \text{(Gleichung 2)}$$

mit:

$U_{\sec}(1)$      Spannung der Empfangsspule (120) (Empfangssignal) während der ersten Wechselspannung,
$U_{\sec}(2)$      Spannung der Empfangsspule (120) (Empfangssignal) während der zweiten Wechselspannung,
I1(1):      Strom durch die erste Sendespule 110 während der ersten Wechselspannung,
I2(1):      Strom durch die zweite Sendespule 110 während der ersten Wechselspannung,
I1(2):      Strom durch die erste Sendespule 110 während der zweiten Wechselspannung,
I2(2):      Strom durch die zweite Sendespule 110 während der zweiten Wechselspannung,
K1      Kopplungsfaktor zwischen der ersten Sendespule (110) und der Empfangsspule (120), und
K2      Kopplungsfaktor zwischen der zweiten Sendespule (110) und der Empfangsspule (120).

Das Gleichungssystem der Gleichungen 1 und 2 wird nach den Kopplungsfaktoren K1 und K2 aufgelöst und die Kopplungsfaktoren K1 und K2 werden auf der Basis der bestimmten Spannungen und Ströme bestimmt.

In einer bevorzugten Ausführungsform weisen die Wechselspannungen der ersten Sendespule 110 und der zweiten Sendespule 115 während der ersten oder zweiten Wechselspannungen jeweils eine Phasendifferenz $\Delta$ von weniger als ca. $\pm 5°$ auf. Die Amplituden der Spannungen an den Sendespulen 110 und 115 werden bevorzugterweise in Abhängigkeit der Kopplungsfaktoren K1 und K2 gewählt. Dazu werden Konstanten A und B gebildet und während der ersten Wechselspannung beträgt die Spannung der ersten Sendespule 110 (A) und die der zweiten Sendespule 115 (B + C1). Während der zweiten Wechselspannung ist die Spannung der ersten Sendespule 110 (A + C2) und die der zweiten Sendespule 115 (B). Die Summanden C1 und C2 sind dabei bevorzugterweise gleich groß. C1 beträgt bevorzugt ca. 3 - 7% von A; C2 beträgt bevorzugt ca. 3 - 7% von B. Das Verhältnis A/B entspricht bevorzugterweise dem Verhältnis K2/K1, dem Kehrwert der Kopplungsfaktoren K1 und K2.

In einer weiteren Ausführungsform wird das Empfangssignal, also die Spannung der Empfangsspule 120, unter unterschiedlichen Polaritäten der Empfangsspule 120 bestimmt, während die Wechselspannungen an den Sendespulen 110 und 115 unverändert bleiben. Die Spannung der ersten Sendespule 110 beträgt also A und die der zweiten Sendespule 115 B; eine Phasendifferenz $\Delta$ zwischen den Spannungen liegt im Bereich von ca. $\pm5°$. Dabei sind A, B und $\Delta$ so gewählt, dass das Empfangssignal sich beim Umpolen der Empfangsspule 110 nicht ändert.

Fig. 2 zeigt zwei Ausführungsformen von Spulen 110 bis 120 des Sensors 100 von Fig. 1. Dabei sind die Spulen auf zwei Ebenen verteilt, die parallel zur Betrachtungsebene versetzt sind. In dem oben gezeigten Ausführungsbeispiel von Fig. 2A liegt die erste Sendespule 110 in einer ersten Ebene und die zweite Sendespule 115 in einer zweiten Ebene. Die Empfangsspule 120 umfasst einen ersten, D-förmigen Teil 205, der auf der ersten Ebene liegt, und einen zweiten, D-förmigen Teil 210, der in der zweiten Ebene liegt. Dabei schließen Richtungen, entlang derer die Teile 205 und 210 bzw. die Sendespulen 110 und 115 aneinander angrenzen, zwischen sich einen Winkel $\alpha$ ein, der bevorzugterweise ungleich 90° ist.

In Fig. 2B ist eine Ausführungsform dargestellt, die der von Fig. 2A ähnelt, wobei jedoch die Teile 205 bzw. 210 der Empfangsspule 120 unterschiedliche Windungszahlen aufweisen. Die Ausführungsformen der Fign. 2A und 2B eignen sich in bevorzugter Weise zum Einsatz am Sensor 100 aus Fig. 1.

Es sind jedoch auch andere Ausführungsformen bzw. Anordnungen der Spulen 110, 115 und 120 möglich, solange die Sendespulen 110 und 115 mit der Empfangsspule 120 induktiv gekoppelt sind und es einen elektromagnetischen Einflussbereich gibt, in dem ein erzeugtes elektromagnetisches Feld durch ein Objekt 105 beeinflusst werden kann.

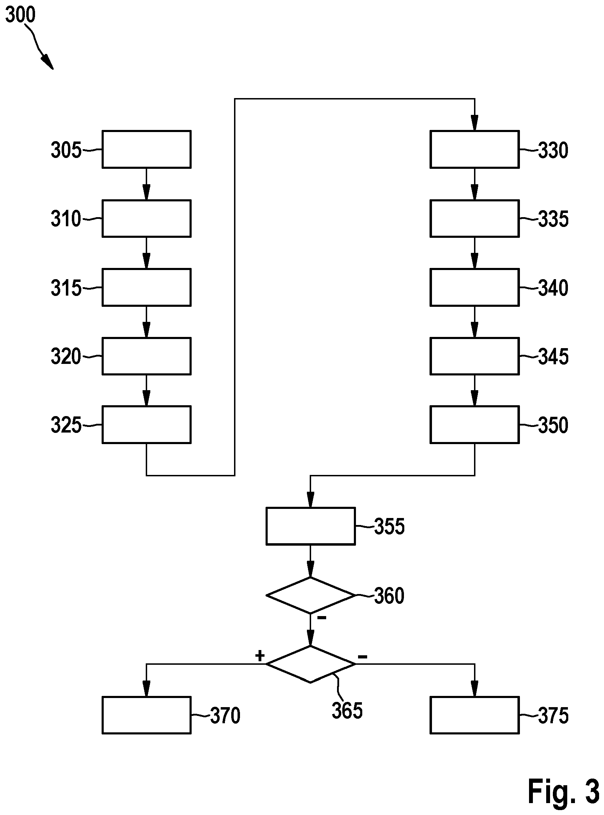

Fig. 3 zeigt ein Ablaufdiagramm eines Verfahrens zum Bestimmen eines Temperatureinflusses auf einen Sensor zur Ortung metallischer oder magnetischer Objekte wie dem von Fig. 1. Das Verfahren 300 ist insbesondere zum Ablaufen auf der Verarbeitungseinrichtung 160 eingerichtet.

In einem ersten Schritt 305 wird eine erste Wechselspannung an die erste Sendespule 110 angelegt. In einem Schritt 310 wird eine zweite Wechselspannung an die zweite Sendespule 115 angelegt. Anschließend wird in einem Schritt 315 der Strom I1(1) durch die erste Sendespule 110, in einem Schritt 320 der Strom I2(1) durch die zweite Sendespule 115 und in einem Schritt 325 die Spannung an der Empfangsspule 120 bestimmt.

In ähnlicher Weise wird in einem Schritt 330 eine dritte Wechselspannung an die erste Sendespule 110 und in einem Schritt 335 eine vierte Wechselspannung an die zweite Sendespule 115 angelegt. Danach werden in einem Schritt 340 der Strom I1(2) durch die erste Sendespule 110, in einem Schritt 345 der Strom I2(2) durch die zweite Sendespule 115 und in einem Schritt 350 die Spannung der Empfangsspule 120 bestimmt. In einer Variante des Verfahrens 300 kann die Bestimmung der Ströme I1(1), I2(1), I1(2) und I2(2) auch weniger häufig als die Bestimmung der Spannung an der Empfangsspule 120 durchgeführt werden.

Anschließend werden in einem Schritt 355 Kopplungsfaktoren K1 und K2 bestimmt, wie oben mit Bezug auf die Gleichungen 1 und 2 genauer ausgeführt ist. In einer weiteren Ausführungsform können die Schritte 305 bis 355 anschließend auch erneut durchlaufen werden, mit dem Unterschied, dass dabei die Polarität der Empfangsspule 120 umgekehrt ist. Dabei bleiben die Spannungen an den Sendespulen 110 und 115 bevorzugterweise unverändert, so dass die Schritte 315 und 320, in denen die Sendeströme der Sendespulen 110 und 115 bestimmt werden, vorzugsweise nur einmal durchlaufen werden müssen. Das Umpolen kann mittels der Auswahlmittel 175 erfolgen oder es kann eine dedizierte Umpoleinrichtung für die Empfangsspule 120 vorgesehen sein, beispielsweise ein Relais oder eine Brückenschaltung. In einer Ausführungsform kann jedes Ende der Empfangsspule 120 mittels der Umpoleinrichtung alternativ mit dem Empfangsverstärker 140 oder der ersten Referenzspannungsquelle 175 verbunden werden. Es kann auch vorgesehen sein, die Empfangsspule 120 ein- oder beidseitig von der restlichen Schaltung zu trennen. Anschließend werden die bestimmten Kopplungsfaktoren K1 und K2 beider Messungen skaliert und paarweise voneinander subtrahiert:

$$K1' = K1(1) - K1(2) \qquad \text{(Gleichung 3)}$$

$$K2' = K2(1) - K2(2) \qquad \text{(Gleichung 4)}$$

mit:

K1(1)     erster Kopplungsfaktor K1 zwischen der ersten Sendespule 110 und der Empfangsspule 120 nach dem ersten Durchlauf,

K1(2)     erster Kopplungsfaktor K1 zwischen der ersten Sendespule 110 und der Empfangsspule 120 nach dem zweiten Durchlauf

K2(1)     zweiter Kopplungsfaktor K2 zwischen der zweiten Sendespule 115 und der Empfangsspule 120 nach dem ersten Durchlauf,

K2(2)     zweiter Kopplungsfaktor K2 zwischen der zweiten Sendespule 115 und der Empfangsspule 120 nach dem zweiten Durchlauf

Vor dem Subtrahieren können die Kopplungsfaktoren K1 und K2 auch mit Skalierungen versehen werden. Skalierung und paarweise Subtraktion kann gegebenenfalls auch getrennt für den Real- und den Imaginärteil der Kopplungsfaktoren erfolgen. Die erforderlichen Skalierungsfaktoren können im nichtflüchtigen Speicher der Verarbeitungseinheit abgelegt sein oder von der Verarbeitungseinheit auf der Grundlage von Messungen berechnet werden.

Insbesondere wenn ein Spannungsverstärker zur Messung der in der Empfangsspule 120 induzierten Spannung verwendet wird, kann diese Spannung von der Polarität abhängen, mit der die Empfangsspule 120 an den Empfangsverstärker 140 angeschlossen ist. Dieses Verhalten zeigt sich immer dann, wenn sich die Eingangsimpedanz des Empfangsverstärkers 140 von der Impedanz der zweiten Referenzspannungsquelle 185 unterscheidet. Durch Invertieren der Polarität der Empfangsspule 120, Bestimmung der Kopplungsfaktoren K1 und K2 jeweils für beide Polaritäten und paarweise Subtraktion der Kopplungsfaktoren K1 und K2 voneinander kann die Abhängigkeit der in der Empfangsspule 120 induzierten Spannung von der Polarität eliminiert werden. Damit lassen sich auch unvermeidliche Temperatureinflüsse auf die induzierte Spannung eliminieren, die durch temperaturbedingte Änderungen der Impedanzen des Empfangsverstärkers 140 bzw. der zweiten Referenzspannungsquelle 185 herrühren.

Bei der Subtraktion der unter unterschiedlichen Polaritäten bestimmten Kopplungsfaktoren K1 und K2 wachsen Störeinflüsse, deren Vorzeichen von der Polarität der Polarität der Empfangsspule 120 abhängen, auf die doppelte Größe an. Dies betrifft insbesondere einen induktiv bedingten Störeinfluss. Andererseits werden solche Störeinflüsse, deren Vorzeichen invariant sind gegenüber der Polarität, unter der die Kopplungsfaktoren K1 und K2 bestimmt wurden, eliminiert. Dies umfasst insbesondere einen kapazitiv bedingten Störeinfluss. Durch die Subtraktion können die Kopplungsfaktoren K1' und K2' in verbesserter Weise auf das Objekt 105 statt auf einen Temperatureinfluss hinweisen.

In einem Schritt 360 wird bestimmt, dass die Empfangssignale der Empfangsspule 120 unterschiedlich sind von abgespeicherten Werten, die beispielsweise aus dem Speicher 190 in Fig. 1 bezogen werden können. Danach wird in einem Schritt 365 bestimmt, ob sich die bestimmten Kopplungsfaktoren K1 und K2 von den abgespeicherten Kopplungsfaktoren unterscheiden. Ist dies der Fall, so wird in einem Schritt 370 auf das Vorhandensein eines Objekts 105 im Bereich der Spulen 110, 115 und 120 geschlossen. Andernfalls wird in einem Schritt 375 ein Temperatureinfluss auf den Sensor 100 bestimmt.

Das Verfahren 300 kann anschließend zum Schritt 305 zurückkehren und erneut durchlaufen. Ein in einem Schritt 375 bestimmter Temperatureinfluss kann bei einer späteren Bestimmung des Objekts 105 in einem Schritt 375 berücksichtigt werden, so dass der Temperatureinfluss auf den Sensor 100 kompensiert wird und das an der Schnittstelle 195 bereitgestellte, auf das Objekt 105 hinweisende Signal um den Temperatureinfluss bereinigt ist.

**Patentansprüche**

1. Verfahren (300) zum Orten eines metallischen und/oder magnetischen Objekts (105), wobei der Sensor (100) zumindest zwei Sendespulen (110, 115) und eine Empfangsspule (120) umfasst, die induktiv miteinander gekoppelt sind, wobei das Verfahren (300) zumindest folgende Schritte umfasst:

   - Bereitstellen (310, 315) eines ersten Paars vorbestimmter Wechselspannungen an den Sendespulen (110, 115) und Abtasten, insbesondere gleichzeitiges Abtasten, von Strömen (I1(1), I2(1)) durch die Sendespulen (110, 115) sowie einer ersten Spannung ($U_{sec}$(1)) der Empfangsspule (120); **dadurch gekennzeichnet, dass** das Verfahren weiterhin umfasst
   - Bereitstellen (335, 340) eines zweiten Paars vorbestimmter Wechselspannungen an den Sendespulen (110, 115), die sich von den ersten Wechselspannungen unterscheiden und Abtasten, insbesondere gleichzeitiges Abtasten, von Strömen (I1(2), I2(2)) durch die Sendespulen (110, 115) sowie einer zweiten Spannung ($U_{sec}$(2)) der Empfangsspule (120);
   - Bestimmen (355) von Kopplungsfaktoren (K1, K2) zwischen den Sendespulen (110, 115) und der Empfangsspule (120) auf der Basis der bestimmten Ströme (I1(1), I2(1), I1(2), I2(2)) und Spannungen ($U_{sec}$(1), $U_{sec}$(2)), und
   - Bestimmen des Objekts (105) auf der Basis der Kopplungsfaktoren (K1, K2), wobei das Objekt (105) bestimmt wird, wenn sich die Kopplungsfaktoren (K1, K2) gegenüber den Kopplungsfaktoren einer zurückliegenden Messung unterscheiden.

2. Verfahren (300) nach Anspruch 1, wobei sich die zurückliegend bestimmten Spannungen ($U_{sec}$(1), $U_{sec}$(2)) und Kopplungsfaktoren (K1, K2) auf eine Anordnung beziehen, bei der die induktive Kopplung zwischen den Sendespulen (110, 115) und der Empfangsspule (120) von metallischen oder magnetisierbaren Objekten (105) unbeeinflusst ist.

3. Verfahren (300) nach einem der vorangehenden Ansprüche, wobei die Spannungen des ersten Paars Wechselspannungen zueinander jeweils um weniger als ±5° phasenverschoben sind und die Spannungen des zweiten Paars Wechselspannungen zueinander jeweils um weniger als $\pm 5°$ phasenverschoben sind.

4. Verfahren (300) nach einem der Ansprüche 1 bis 3, wobei Konstanten A, B, C1 und C2 gewählt sind, sodass für die:

   - Spannung der ersten Sendespule beim ersten Paar Wechselspannungen A eingestellt wird;
   - Spannung der zweiten Sendespule beim ersten Paar Wechselspannungen B + C1 eingestellt wird;
   - Spannung der ersten Sendespule beim zweiten Paar Wechselspannungen A + C2 eingestellt wird;
   - Spannung der zweiten Sendespule beim zweiten Paar Wechselspannungen B eingestellt wird,
   - und wobei ferner gilt: A/B = Kopplungsfaktor der zweiten Sendespule / Kopplungsfaktor der ersten Sendespule, C1 beträgt ca. 3 - 7% von A und C2 ca. 3 - 7 % von B.

5. Verfahren (300) nach einem der vorangehenden Ansprüche, wobei die Kopplungsfaktoren (K1, K2) ein erstes Mal und nach Umkehr der Polarität der Empfangsspule (120) ein zweites Mal bestimmt und miteinander verrechnet, insbesondere skaliert und paarweise voneinander abgezogen (355) (K1(1) - K1(2), K2(1) - K2(2)) werden.

6. Computerprogrammprodukt mit Programmcodemitteln zur Durchführung des Verfahrens (300) nach einem der vorangehenden Ansprüche, wenn das Computerprogrammprodukt auf einer Verarbeitungseinrichtung (160) abläuft oder auf einem computerlesbaren Datenträger gespeichert ist.

7. Sensor (100) zur Ortung eines metallischen und/oder magnetischen Objekts (105), zumindest folgende Elemente umfassend:

   - zwei Sendespulen (110, 115) und eine Empfangsspule (120), die induktiv miteinander gekoppelt sind;
   - eine Ansteuereinrichtung (125, 130, 145, 150) zur Versorgung der Sendespulen (110, 115) mit Wechselspannungen;
   - eine Abtasteinrichtung (140,155) zur Bestimmung von Strömen (I1(1), I2(1), I1(2), I2(2)) durch die Sendespulen (110, 115) sowie des Empfangssignals ($U_{sec}(1)$, $U_{sec}(2)$) **dadurch gekennzeichnet, dass**
   - eine Verarbeitungseinrichtung (160) vorgesehen und dazu eingerichtet ist, Kopplungsfaktoren (K1, K2) zwischen den Sendespulen (110, 115) und der Empfangsspule (120) auf der Basis der bestimmten Ströme (I1(1), I2(1), I1(2), I2(2)) und Spannungen ($U_{sec}(1)$, $U_{sec}(2)$) zu bestimmen,
   - wobei die Verarbeitungseinrichtung (160) ferner dazu eingerichtet ist, das Objekt (105) auf der Basis der Kopplungsfaktoren (K1, K2) zu bestimmen, wobei das Objekt (105) bestimmt wird, wenn sich die Kopplungsfaktoren (K1, K2) gegenüber den Kopplungsfaktoren einer zurückliegenden Messung unterscheiden.

8. Sensor (100) nach Anspruch 7, wobei die Abtasteinrichtung (140,155) einen Analog-Digital-Wandler (155) umfasst und Auswahlmittel (175) vorgesehen sind, um mittels der Abtasteinrichtung (135) alternativ das Empfangssignal (Usec(1), $U_{sec}(2)$) oder einen der Spulenströme (I1(1), I2(1), I1(2), I2(2)) abzutasten.

9. Sensor (100) nach einem der Ansprüche 7 oder 8, ferner umfassend ein Auswahlmittel (175) zur Umkehrung der Polarität der Empfangsspule (120).

10. Sensor (100) nach einem der Ansprüche 7 bis 9, wobei die Ansteuereinrichtung einen Digital-Analog-Wandler (145, 150) umfasst.

11. Sensor (100) nach einem der Ansprüche 7 bis 10, ferner umfassend eine erste Referenzspannungsquelle (180) zur Beaufschlagung der Empfangsspule (120) mit einer vorbestimmten Spannung.

12. Sensor (100) nach einem der Ansprüche 7 bis 11, ferner umfassend eine zweite Referenzspannungsquelle (185) zur Beaufschlagung der Sendespulen (110, 115) mit jeweils einer vorbestimmten Spannung.

**Claims**

1. Method (300) for locating a metal and/or magnetic object (105), wherein the sensor (100) comprises at least two transmitting coils (110, 115) and a receiving coil (120) which are inductively coupled to one another, wherein the method (300) comprises at least the following steps of:

   - providing (310, 315) a first pair of predetermined AC voltages at the transmitting coils (110, 115) and sampling, in particular simultaneously sampling, currents (11(1), I2(1)) through the transmitting coils (110, 115) and a first voltage ($U_{sec}$(1)) of the receiving coil (120); **characterized in that** the method also comprises

- providing (335, 340) a second pair of predetermined AC voltages at the transmitting coils (110, 115), which differ from the first AC voltages, and sampling, in particular simultaneously sampling, currents (11(2), 12(2)) through the transmitting coils (110, 115) and a second voltage ($U_{sec}$(2)) of the receiving coil (120);

- determining (355) coupling factors (K1, K2) between the transmitting coils (110, 115) and the receiving coil (120) on the basis of the determined currents (11(1), 12(1), 11(2), 12(2)) and voltages ($U_{sec}$(1), $U_{sec}$(2)), and

- determining the object (105) on the basis of the coupling factors (K1, K2), wherein the object (105) is determined if the coupling factors (K1, K2) differ from the coupling factors of a past measurement.

2. Method (300) according to Claim 1, wherein the voltages ($U_{sec}$(1), $U_{sec}$(2)) and coupling factors (K1, K2) determined in the past relate to an arrangement in which the inductive coupling between the transmitting coils (110, 115) and the receiving coil (120) is not influenced by metal or magnetizable objects (105).

3. Method (300) according to one of the preceding claims, wherein the voltages in the first pair of AC voltages are each phase-shifted by less than $\pm 5°$ with respect to one another and the voltages in the second pair of AC voltages are each phase-shifted by less than $\pm 5°$ with respect to one another.

4. Method (300) according to one of Claims 1 to 3, wherein constants A, B, C1 and C2 are selected, with the result that:

   - A is set for the voltage of the first transmitting coil in the first pair of AC voltages;
   - B + C1 is set for the voltage of the second transmitting coil in the first pair of AC voltages;
   - A + C2 is set for the voltage of the first transmitting coil in the second pair of AC voltages;
   - B is set for the voltage of the second transmitting coil in the second pair of AC voltages,
   - and wherein the following also applies: A/B = coupling factor of the second transmitting coil/coupling factor of the first transmitting coil, C1 is approximately 3-7% of A and C2 is approximately 3-7% of B.

5. Method (300) according to one of the preceding claims, wherein the coupling factors (K1, K2) are determined a first time and are determined a second time after reversal of the polarity of the receiving coil (120) and are offset with one another, in particular scaled and subtracted (355) from one another in pairs (K1(1) - K1(2), K2(1) - K2(2)).

6. Computer program product having program code means for carrying out the method (300) according to one of the preceding claims when the computer program product runs on a processing device (160) or is stored on a computer-readable data storage medium.

7. Sensor (100) for locating a metal and/or magnetic object (105), at least comprising the following elements:

   - two transmitting coils (110, 115) and a receiving coil (120) which are inductively coupled to one another;
   - an actuation device (125, 130, 145, 150) for supplying the transmitting coils (110, 115) with AC voltages;
   - a sampling device (140, 155) for determining currents (11(1), 12(1), 11(2), 12(2)) through the transmitting coils (110, 115) and the reception signal ($U_{sec}$(1), $U_{sec}$(2)), **characterized in that**
   - a processing device (160) is provided and is configured to determine coupling factors (K1, K2) between the transmitting coils (110, 115) and the receiving coil (120) on the basis of the determined currents (11(1), 12(1), 11(2), 12(2)) and voltages ($U_{sec}$(1), $U_{sec}$(2)),
   - wherein the processing device (160) is also configured to determine the object (105) on the basis of the coupling factors (K1, K2), wherein the object (105) is determined if the coupling factors (K1, K2) differ from the coupling factors of a past measurement.

8. Sensor (100) according to Claim 7, wherein the sampling device (140, 155) comprises an analogue/digital converter (155), and selection means (175) are provided in order to alternatively sample the reception signal ($U_{sec}$(1), $U_{sec}$(2)) or one of the coil currents (11(1), 12(1), 11(2), 12(2)) using the sampling device (135).

9. Sensor (100) according to either of Claims 7 and 8, also comprising a selection means (175) for reversing the polarity of the receiving coil (120).

10. Sensor (100) according to one of Claims 7 to 9, wherein the actuation device comprises a digital/analogue converter (145, 150).

**11.** Sensor (100) according to one of Claims 7 to 10, also comprising a first reference voltage source (180) for applying a predetermined voltage to the receiving coil (120).

**12.** Sensor (100) according to one of Claims 7 to 11, also comprising a second reference voltage source (185) for applying a predetermined voltage to each of the transmitting coils (110, 115).

**Revendications**

**1.** Procédé (300) de localisation d'un objet métallique et/ou magnétique (105), dans lequel le capteur (100) comprend au moins deux bobines émettrices (110, 115) et une bobine réceptrice (120) reliées entre elles par couplage inductif, dans lequel le procédé (300) comprend au moins les étapes suivantes :

- appliquer (310, 315) aux bobines émettrices (110, 115) une première paire de tensions alternatives prédéfinies et échantillonner, en particulier échantillonner en même temps, des courants (I1(1), I2(1)) qui traversent les bobines émettrices (110, 115) ainsi qu'une première tension ($U_{sec}(1)$) aux bornes de la bobine réceptrice (120) ; **caractérisé en ce que** le procédé consiste en outre à
- appliquer (335, 340) aux bobines émettrices (110, 115) une deuxième paire de tensions alternatives prédéfinies, qui sont différentes des premières tensions alternatives, et échantillonner, en particulier échantillonner en même temps, des courants (I1(2), I2(2)) qui traversent les bobines émettrices (110, 115) ainsi qu'une deuxième tension ($U_{sec}(2)$) aux bornes de la bobine réceptrice (120) ;
- sur la base des courants (I1(1), I2(1), I1(2), I2(2)) et des tensions ($U_{sec}(1)$, $U_{sec}(2)$) déterminés, déterminer (355) des facteurs de couplage (K1, K2) entre les bobines émettrices (110, 115) et la bobine réceptrice (120), et
- déterminer l'objet (105) sur la base des facteurs de couplage (K1, K2), dans lequel l'objet (105) est déterminé lorsque les facteurs de couplage (K1, K2) diffèrent des facteurs de couplage d'une mesure précédente.

**2.** Procédé (300) selon la revendication 1, dans lequel les tensions ($U_{sec}(1)$, $U_{sec}(2)$) et les facteurs de couplage (K1, K2) déterminés précédemment se rapportent à un agencement selon lequel le couplage inductif entre les bobines émettrices (110, 115) et la bobine réceptrice (120) n'est pas influencé par des objets métalliques ou magnétisables (105).

**3.** Procédé (300) selon l'une des revendications précédentes, dans lequel les tensions de la première paire de tensions alternatives sont respectivement déphasées de moins de $\pm 5°$ l'une par rapport à l'autre et les tensions de la deuxième paire de tensions alternatives sont respectivement déphasées de moins de $\pm 5°$ l'une par rapport à l'autre.

**4.** Procédé (300) selon l'une des revendications 1 à 3, dans lequel les constantes A, B, C1 et C2 sont choisies de telle sorte que :

- pour la tension de la première bobine émettrice, la première paire de tensions alternatives est fixée à A ;
- pour la tension de la deuxième bobine émettrice, la première paire de tensions alternatives est fixée à B + C1 ;
- pour la tension de la première bobine émettrice, la deuxième paire de tensions alternatives est fixée à A + C2 ;
- pour la tension de la deuxième bobine émettrice, la deuxième paire de tensions alternatives est fixée à B,
- et dans lequel on a en outre : A/B = facteur de couplage de la deuxième bobine émettrice / facteur de couplage de la première bobine émettrice, C1 représente environ 3 - 7% de A et C2 représente environ 3 - 7% de B.

**5.** Procédé (300) selon l'une des revendications précédentes, dans lequel les facteurs de couplage (K1, K2) sont déterminés une première fois et, après inversion de la polarité de la bobine réceptrice (120), sont déterminés une deuxième fois et sont compensés les uns par rapport aux autres, en particulier mis à l'échelle et soustraits les uns des autres par paires (355) (K1(1)-K1(2), K2(1) - K2(2)).

**6.** Produit de programme d'ordinateur comportant des moyens à code de programme permettant de mettre en œuvre le procédé (300) selon l'une des revendications précédentes lorsque le produit de programme d'ordinateur est exécuté sur un dispositif de traitement (160) ou est stocké sur un support de données lisible par ordinateur.

**7.** Capteur (100) servant à localiser un objet métallique et/ou magnétique (105), comprenant au moins les éléments suivants :

- deux bobines émettrices (110, 115) et une bobine réceptrice (120) qui sont reliées entre elles par couplage inductif ;

- un dispositif de commande (125, 130, 145, 150) servant à alimenter les bobines émettrices (110, 115) en tensions alternatives ;

- un dispositif d'échantillonnage (140, 155) servant à déterminer des courants (I1(1), I2(1), I1(2), I2(2)) qui traversent les bobines émettrices (110, 115) ainsi que le signal reçu ($U_{sec}$(1), $U_{sec}$(2)), **caractérisé en ce que**

- il est prévu un dispositif de traitement (160) qui est conçu pour déterminer des facteurs de couplage (K1, K2) entre les bobines émettrices (110, 115) et la bobine réceptrice (120) sur la base des courants (I1(1), I2(1), I1(2), I2(2)) et des tensions ($U_{sec}$ (1), $U_{sec}$ (2)) déterminés,

- dans lequel le dispositif de traitement (160) est en outre conçu pour déterminer l'objet (105) sur la base des facteurs de couplage (K1, K2), dans lequel l'objet (105) est déterminé lorsque les facteurs de couplage (K1, K2) diffèrent des facteurs de couplage d'une mesure précédente.

8. Capteur (100) selon la revendication 7, dans lequel le dispositif d'échantillonnage (140, 155) comprend un convertisseur analogique-numérique (155) et dans lequel il est prévu des moyens de sélection (175) servant à échantillonner alternativement le signal reçu ($U_{sec}$(1), $U_{sec}$(2)) ou l'un des courants de bobine (I1(1), I2(1), I1(2), I2(2)) au moyen du dispositif d'échantillonnage (135).

9. Capteur (100) selon l'une des revendications 7 ou 8, comprenant en outre des moyens de sélection (175) servant à inverser la polarité de la bobine réceptrice (120).

10. Capteur (100) selon l'une des revendications 7 à 9, dans lequel le dispositif de commande comprend un convertisseur numérique-analogique (145, 150).

11. Capteur (100) selon l'une des revendications 7 à 10, comprenant en outre une première source de tension de référence (180) servant à appliquer une tension prédéfinie à la bobine réceptrice (120).

12. Capteur (100) selon l'une des revendications 7 à 11, comprenant en outre une deuxième source de tension de référence (185) servant à appliquer une tension prédéfinie à chacune des bobines émettrices (110, 115) .

Fig. 1

**Fig. 2A**

**Fig. 2B**

300

Fig. 3

**EP 2 981 851 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010133328 A1

- DE 102004047188 A1